# FASCICULE DE BREVET EUROPEEN

(11) **EP 1 098 293 B1**
(45) Date de publication et mention de la délivrance du brevet: **30.04.2008**
(21) Numéro de dépôt: 00403012.8
(22) Date de dépôt: 30.10.2000
(51) Int. Cl.: G09G 5/22, G09G 3/18, G06F 3/14, G09G 1/16, G06F 17/21

(54) **Dispositif d'affichage d'au moins deux types distincts de caractères reçus sous la forme d'un flux de données**
Vorrichtung zum Anzeigen von wenigstens zwei verschiedenen Zeichensätzen, welche in Form eines Datenstroms empfangen werden
Device for displaying at least two different character types received in the form of a data stream

(30) Priorité: 04.11.1999 FR 9913795
(43) Date de publication de la demande: 09.05.2001
(73) Titulaire: Alcatel Lucent, 75008 Paris (FR)
(72) Inventeur: Duvillier, Alexis, 95100 Argenteuil (FR)
(74) Mandataire: Korakis-Ménager, Sophie

(56) Documents cités:
- WORLD WIDE WEB CONSORTIUM: "HTML Document Representation" TECHNICAL REPORTS OF THE W3C, [en ligne] 24 août 1999 (1999-08-24), XP002143286 Extrait de l'Internet: <URL:http://www.w3.org/TR/1999/PR-html40-1 9990824/charset.html> [extrait le 2000-07-24]

## Description

La présente invention concerne de manière générale un dispositif d'affichage d'au moins deux types distincts de caractères. Ces différents types de caractères, par exemple européens et chinois, sont reçus par un dispositif d'affichage sous la forme de flux de données successifs en provenance d'une unité centrale. Chaque flux de données fait partie par exemple d'un ensemble d'informations transmises pour l'affichage d'une page HTML (HyperText Markup Language) ou WML (Wireless Markup Language) transmise dans un environnement INTERNET.

Selon la technique antérieure, il est connu d'encoder ces caractères de types distincts sous la forme de caractères encodés, par exemple selon les alphabets UTF8 ou UCS2 normalisés par les instances de standardisation, typiquement pour interprétation après réception par un navigateur Internet, ou browser.

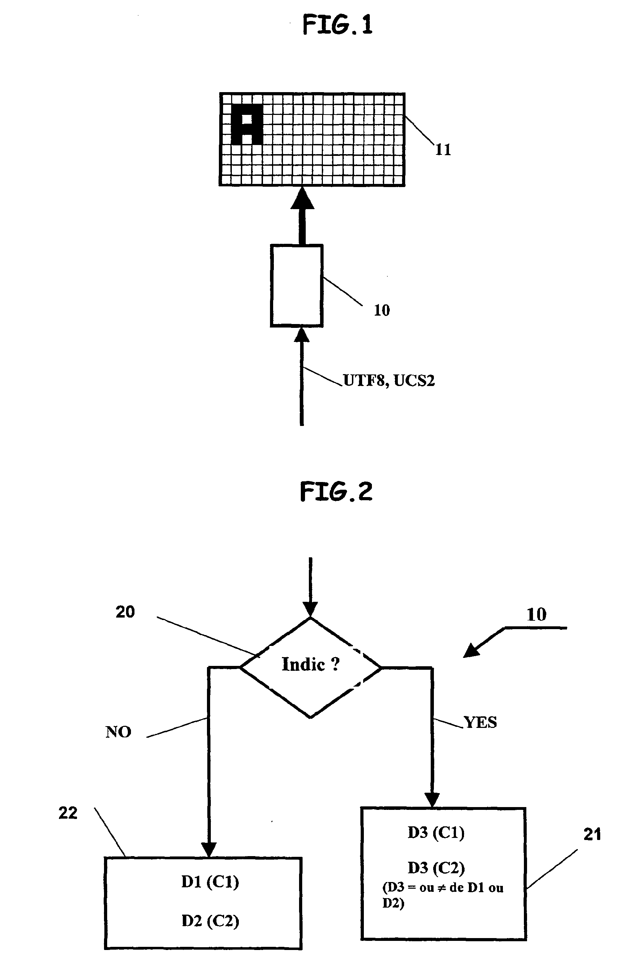

Un réseau de type INTERNET offre aujourd'hui une possibilité d'accès à des informations réparties dans le monde entier. Ces informations sont mémorisées dans des bases de données, ou serveurs, accessibles par un terminal, fixe (ex : télévision, PC) ou mobile (ex: téléphone mobile) incluant un dispositif d'affichage. Certains serveurs peuvent contenir des caractères de types différents, par exemple européen et chinois, préalablement encodés, qui peuvent être transmis à un terminal dans un même flux de caractères encodés. Le dispositif d'affichage comprend typiquement un interpréteur qui reçoit ce flux de caractères encodés et affiche en résultat sur un écran, par exemple LCD ou bitmap, des caractères associés par illumination de pixels sur l'écran. Comme montré sur la Figure 1, l'interpréteur 10 reçoit le flux des caractères encodés, par exemple selon l'alphabet UTF8 ou l'alphabet UCS2 ou encore ISO-LATIN-ONE, etc..., et commande l'affichage des caractères correspondants sur un écran 11 à travers un bus de commande. De manière connue selon la technique antérieure, pour un écran de type LCD, cet écran 11 est associé à une mémoire vidéo (non représentée). L'interpréteur 10 écrit des éléments binaires « 0 » ou « 1 » dans des cellules mémoire de cette mémoire vidéo respectivement associées à des pixels de l'écran 11,. Cette mémoire vidéo est balayée périodiquement en lecture pour une illumination de chacun des pixels correspondants à des cellules mémoire à l'état « 1 ».

Typiquement, selon la technique antérieure, l'interpréteur est initialisé en fonction du type de chaque caractère reçu. Toutes les langues n'utilisant pas des caractère, ou idéogrammes, identiques, il peut apparaître nécessaire d'afficher des caractères d'une langue donnée avec une dimension ou taille d'affichage sur l'écran supérieure à la dimension requise pour une autre langue, afin d'assurer un même niveau de distinction des caractères entre eux. En effet, plus une langue inclut des caractères complexes et nombreux, plus la dimension d'affichage, ou le niveau de résolution, de chacun de ces caractères doit être élevé afin de faciliter la lecture et la distinction entre eux de ces caractères par l'usager.

Lorsqu'un dispositif d'affichage reçoit des caractères de types différents, par exemple européen et chinois, il résulte alors selon la technique antérieure que certains caractères d'un type donné sont affichés sur l'écran avec un format donné, tandis que d'autres caractères d'un autre type sont affichés avec un autre format, conduisant alors à un affichage peu esthétique, voire illisible, des caractères successifs de types différents. Le terme « format » est utilisé ici pour désigner la taille, ou dimension, utilisée par chaque caractère. Le terme « caractère» désigne ou bien une lettre d'un alphabet tel qu'arabe, européen ou russe, ou bien un idéogramme d'une langue telle que le chinois ou le japonais.

Un objectif est donc de fournir une unité centrale apte à informer le dispositif d'affichage de l'existence de caractères de types différents dans le flux de caractères transmis. Un autre objectif de l'invention est de fournir un dispositif d'affichage propre à offrir un affichage optimal des caractères encodés reçus, en fonction de l'information fournie par cette unité centrale.

A cette fin, un dispositif d'affichage selon l'invention d'au moins deux types de caractères, dits premier et second type de caractères, comprenant un écran reproduisant sous forme de caractères lisibles les caractères encodés reçus dans un flux de données, les caractères desdits premier et second types étant reproduits sur ledit écran avec des formats respectifs distincts entre eux lorsqu'un seul type de caractères est reçu dans un même flux de données, est caractérisé en ce qu'il comprend un détecteur d'un élément d'indication de l'existence d'au moins deux types de caractères dans un même flux de données reçu, pour activer la sélection d'un format commun d'affichage sur ledit écran des caractères desdits premier et second types.

Selon une variante de l'invention, l'écran est un écran LCD associé à une mémoire vidéo, et le dispositif comprend un interpréteur pour interpréter les caractères encodés reçus en des éléments binaires qui sont écrits dans des cellules mémoire de mémoire vidéo respectivement associées à des pixels dudit écran. Cet interpréteur opère selon au moins deux formats d'affichage distincts, lesdits deux formats d'affichage étant utilisés respectivement pour les caractères de premier type et caractères de second type lorsqu'un seul type de caractère est reçu dans un même flux de données. Un même format d'affichage, qui peut être l'un desdits deux formats d'affichage, est par contre utilisé pour les deux types de caractères lorsqu'ils sont reçus dans un même flux de données.

Une unité centrale transmettant les flux de données est également proposée par l'invention. Cette unité centrale transmet des flux successifs de données à destination d'au moins un terminal, un flux de données comprenant des caractères encodés destinés à être reproduits sous forme de caractères lisibles sur un écran du terminal, le flux de données comprenant ou bien seulement des caractères du premier type, ou bien seulement des caractères du second type, ou bien encore au moins des caractères des premier et second types, l'unité centrale insérant dans une portion initiale du flux de données un élément d'indication de l'existence d'au moins deux types de caractères dans ce flux de données lorsque ledit flux de données comprend au moins des caractères des premier et second types

D'autres caractéristiques et avantages de la présente invention apparaîtront plus clairement à la lecture de la description qui suit, en référence aux dessins annexés correspondants dans lesquels :
- la Figure 1 est un bloc-diagramme d'un dispositif d'affichage; et
- la Figure 2 montre un schéma d'algorithme inclut dans un interpréteur de données encodées reçues, formant partie du dispositif de la Figure 1.

Selon l'invention, une unité centrale transmettant des flux successifs de données à destination d'au moins un terminal distant, qui peut être fixe ou mobile. Chaque flux de données transmis par l'unité centrale comprend des caractères encodés destinés à être reproduits sous forme de caractères lisibles sur l'écran du terminal. Le flux de données comprend ou bien seulement un premier type de caractères, ou bien seulement un second type de caractères, ou bien encore au moins des caractères des premier et second types. Par exemple, chaque flux de données est une page HTML ou une page XML correspondant à une page HTML après traduction par une passerelle selon les Recommandations du Forum WAP (Wireless Access Protocol). Selon l'invention, l'unité centrale insère dans une portion initiale d'un flux de données à transmettre un élément d'indication de l'existence d'au moins deux types de caractères dans ce flux de données lorsque le flux de données comprend au moins un caractère du premier type et au moins un caractère du second type. Pour cela, l'unité centrale avant de transmettre le flux de données analyse le contenu du flux de données dont les caractères à afficher sur l'écran du terminal sont sous une forme encodée par exemple selon l'alphabet UTF8 ou l'alphabet UCS2. Dès lors que la présence de deux types de caractères sont détectés, elle insère cet élément d'indication de l'existence d'au moins deux types de caractères dans ce flux de données.

Comme montré sur la Figure 2, l'interpréteur 10 selon l'invention comprend un détecteur 20 d'un élément « Indic » d'indication de l'existence d'au moins deux types de caractères dans un même flux de données reçu, pour activer la sélection d'un format commun d'affichage sur ledit écran des caractères desdits premier et second types, lorsque ces deux types de caractères sont présents dans le flux de données reçu. Comme cela a déjà été décrit précédemment et à titre d'exemple, pour un écran de type LCD, l'écran 11 est associé à une mémoire vidéo. L'interpréteur 10 écrit des éléments binaires « 0 » ou « 1 » dans des cellules mémoire de cette mémoire vidéo respectivement associées à des pixels de l'écran 11. Cette mémoire vidéo est balayée périodiquement en lecture pour une illumination de chacun des pixels de l'écran correspondants à des cellules mémoire à l'état « 1 ». L'interpréteur 10 active alors des moyens de gestion d'affichage internes, qui peuvent être réalisés sous forme partiellement ou totalement software, pour la gestion de la mémoire vidéo en fonction des caractères encodés successifs reçus. Comme montré par les étapes 21 et 22 de la Figure 2, si aucun élément d'indication « Indic » de l'existence d'au moins deux types de caractères dans un même flux de données reçu n'est détecté, alors l'interpréteur 10 active ou bien celui des moyens de gestion d'affichage D1 approprié pour afficher les caractères C1 du premier type, ou bien celui des moyens de gestion d'affichage D2 approprié pour afficher les caractères C2 du second type. La sélection de l'un de ces deux moyens d'affichage D1 ou D2 est réalisé en fonction du type du premier caractère reçu.

Par contre, si un élément d'indication « Indic » de l'existence d'au moins deux types de caractères dans un même flux de données reçu est détecté (20), alors l'interpréteur 10 active un moyen de gestion d'affichage commun D3 pour afficher avec un même format à la fois les caractères C1 du premier type et les caractères C2 du second type. Dans le cadre de l'invention, la terminologie « moyens de gestion d'affichage » est utilisée pour différencier entre eux des circuits de traitements des caractères encodés reçus, réalisés sous forme partiellement ou totalement logicielle, utilisant des formats d'affichage distincts sur l'écran 11. Selon l'invention, le moyen de gestion d'affichage commun D3 utilisé pour afficher à la fois les caractères C1 du premier type et les caractères C2 du second type peut utiliser le format d'affichage de l'un ou l'autre des deux moyens d'affichage D1 ou D2, ou encore un autre format d'affichage distinct des formats d'affichage respectifs des deux moyens d'affichage D1 ou D2.

Dans la description qui précède, le terme « écran » est utilisé pour désigné tout ou partie d'un support de visualisation. Il peut très bien être envisagé que le suport de visualisation est par exemple, pour des raisons d'ergonomie, séparé en deux parties, une partie servant à la visualisation d'un MENU et l'autre partie à la visualisation de données reçues. Dans ce cas, la partie allouée à la visualisation du MENU peut très bien utilisé une taille de caractère plus grande que celle utilisée pour les données reçues et cela indépendamment de la mise en oeuvre de l'invention.

## Revendications

1. Dispositif d'affichage d'au moins deux types de caractères, dits premier et second type de caractères, comprenant un écran (11) reproduisant sous forme de caractères lisibles et graphiques les caractères encodés reçus dans un flux de données, les caractères desdits premier et second types étant reproduits sur ledit écran avec des formats respectifs distincts entre eux lorsqu'un seul type de caractère est reçu dans un même flux de données, **caractérisé en ce qu'**il comprend un détecteur d'un élément d'indication de l'existence d'au moins deux types de caractères dans un même flux de données reçu, pour activer la sélection d'un format commun d'affichage sur ledit écran des caractères desdits premier et second types.

2. Dispositif d'affichage conforme à la revendication 1, **caractérisé en ce que** ledit écran est un écran LCD associé à une mémoire vidéo, et **en ce qu'**il comprend un interpréteur pour interpréter les caractères encodés reçus en des éléments binaires qui sont écrits dans des cellules mémoire de mémoire vidéo respectivement associées à des pixels dudit écran.

3. Dispositif d'affichage conforme à la revendication 2, **caractérisé en ce que** ledit interpréteur opère selon au moins deux formats d'affichage, lesdits deux formats d'affichage étant utilisés respectivement pour les caractères desdits premier et second types lorsqu'un seul type de caractère est reçu dans un même flux de données, et un même format d'affichage, qui peut être l'un desdits deux formats d'affichage, étant utilisé pour les deux types de caractères lorsqu'ils sont reçus dans un même flux de données.

4. Terminal fixe ou mobile, **caractérisé en ce qu'**il comprend un dispositif d'affichage conforme à l'une quelconque des revendications 1 à 3.

5. Unité centrale transmettant des flux successifs de données à destination d'au moins un terminal conforme à la revendication 4, un flux de données comprenant des caractères encodés destinés à être reproduits sous forme de caractères lisibles sur un écran dudit terminal, ledit flux de données comprenant ou bien seulement un premier type de caractères, ou bien seulement un second type de caractères, ou bien encore au moins des caractères des premier et second types, ladite unité centrale insérant dans une portion initiale du flux de données un élément d'indication de l'existence d'au moins deux types de caractères dans ce flux de données lorsque ledit flux de données comprend au moins des caractères des premier et second types

6. Unité centrale conforme à la revendication 5, **caractérisé en ce que** ledit flux de données est une page HTML ou WML.

## Claims

1. A display device for displaying characters of at least two types, referred to as a first type and a second type,the device comprising a screen that reproduces in the form of graphic and legible characters the encoded characters received in a data stream, with the characters of the first and second types being reproduced on said screen with respective mutually different formats when only one type of character is received in a given data stream, the device including a detector for detecting an element that indicates the existence of at least two types of characters in the same received data stream in order to trigger the selection of a common display format on said screen for characters of said first and second types.

2. A display device according to claim 1, wherein said screen is an LCD screen associated with a video memory, and wherein the device includes an interpreter for interpreting the received encoded characters as bits which are written in memory cells of a video memory associated with respective pixels of said screen.

3. A display device according to claim 2, wherein said interpreter operates with at least two display formats, said two display formats being used for characters of said first and second types respectively when only one type of character is received in the same given data stream, and a single display format, which could be either one of said two display formats, being used for both types of characters when they are received in the same data stream.

4. A fixed or mobile terminal that includes a display device according to one of the claims 1 to 3.

5. A central unit that transmits successive data stream to at least one terminal according to claim 4, a data stream comprising encoded characters to be reproduced in the form of legible characters on a screen of said terminal, said data stream comprising either only characters of a first type, or only characters of a second type, or characters of at least said first and second types, with said central unit inserting an element into the initial portion of a data stream to indicate the existence of at least two types of characters in said data stream when said data stream comprises at least characters of the said first and second types.

6. A central unit according to claim 5, wherein said data stream is an HTML page or a WML page.

## Patentansprüche

1. Vorrichtung zur Anzeige von wenigstens zwei Zeichensätzen, dem so genannten ersten und zweiten Zeichensatz, die einen Bildschirm (11) umfasst, der die in einem Datenstrom empfangenen codierten Zeichen in Form von lesbaren, grafischen Zeichen darstellt, wobei der genannte erste und zweite Seichensatz auf dem genannten Bildschirm in jeweils unterschiedlichen Formaten dargestellt werden, wenn nur ein einziger Zeichensatz im gleichen Datenstrom empfangen wird, **dadurch gekennzeichnet, dass** sie einen Detektor für ein Markierungselement für das Vorhandensein von wenigstens zwei Zeichensätzen im gleichen empfangenen Datenstrom umfasst, um die Auswahl eines gemeinsamen Anzeigeformats für den genannten ersten und zweiten Zeichensatz auf dem genannten Bildschirm zu aktivieren.

2. Vorrichtung zur Anzeige gemäß Anspruch 1, **dadurch gekennzeichnet, dass** es sich bei dem genannten Bildschirm um einen LCD-Bildschirm handelt, der einem Videospeicher zugeordnet ist, sowie **dadurch**, dass sie einen Interpretierer umfasst, um die empfangenen codierten Zeichen in binäre Elemente umzuwandeln, die in die Speicherzellen des Videospeichers geschrieben werden, die jeweils bestimmten Pixeln des Bildschirms zugeordnet sind.

3. Vorrichtung zur Anzeige gemäß Anspruch 2, **dadurch gekennzeichnet, dass** der genannte Interpretierer entsprechend mindestens zwei Anzeigeformaten arbeitet, wobei die beiden genannten Anzeigeformate jeweils für den genannten ersten bzw. zweiten Zeichensatz genutzt werden, wenn nur ein Zeichensatz im gleichen Datenstrom empfangen wird, und ein gemeinsames Anseigeformat, bei dem es sich um eines der beiden genannten Anzeigeformate handeln kann, für beide Zeichensätse verwendet wird, wenn diese im gleichen Datenstrom empfangen werden.

4. Stationäres oder mobiles Endgerät, **dadurch gekennzeichnet, dass** es eine Vorrichtung zur Anzeige gemäß einem der vorstehenden Ansprüche 1 bis 3 umfasst.

5. Zentraleinheit, die aufeinander folgende Datenströme an mindestens ein Endgerät gemäß Anspruch 4 überträgt, wobei ein Datenstrom codierte Zeichen umfasst, die in Form von lesbaren Zeichen auf einem Bildschirm des genannten Endgeräts dargestellt werden sollen, wobei der genannte Datenstrom entweder nur den ersten Zeichensatz oder nur den zweiten Zeichensatz oder wenigstens den ersten und den zweiten Zeichensatz umfasst, wobei die genannte Zentraleinheit ein Markierungselement für die Anwesenheit von wenigstens zwei zeichensätzen in diesem Datenstrom in den ersten Teil des Datenstroms einfügt, wenn der genannte Datenstrom wenigstens den ersten und den zweiten Zeichensatz umfasst.

6. Zentraleinheit gemäß Anspruch 5, **dadurch gekennzeichnet, dass** es sich bei dem genannten Datenstrom um eine HTML- oder WML-Seite handelt.
